# EUROPÄISCHE PATENTSCHRIFT

(11) **EP 1 001 061 B1**
(45) Veröffentlichungstag und Bekanntmachung des Hinweises auf die Patenterteilung: **29.01.2003**
(21) Anmeldenummer: 99810903.7
(22) Anmeldetag: 05.10.1999
(51) Int. Cl.: D03C 1/00, F16D 25/08, F16D 21/04

(54) **Anordnung zum Steuern einer Rotations-Schaftkupplung für eine Schaftmaschine und Rotations-Schaftkupplung mit einer solchen Anordnung**
Mechanism to control a rotary clutch for a dobby and dobby equiped with such a mechanism
Dispositif de commande d'un accouplement rotatif pour ratière ainsi que ratière équipée d'un tel dispositif

(30) Priorität: 04.11.1998 EP 98811103
(43) Veröffentlichungstag der Anmeldung: 17.05.2000
(73) Patentinhaber: Sulzer Textil AG, 8630 Rüti (CH)
(72) Erfinder: Kleiner, Walter, 8816 Hirzel (CH)
(74) Vertreter: Sulzer Management AG

(56) Entgegenhaltungen:
- EP-A- 0 234 321
- EP-A- 0 274 119
- PATENT ABSTRACTS OF JAPAN vol. 097, no. 003, 31. März 1997 (1997-03-31) -& JP 08 296143 A (MURATA MACH LTD), 12. November 1996 (1996-11-12)
- PATENT ABSTRACTS OF JAPAN vol. 095, no. 009, 31. Oktober 1995 (1995-10-31) -& JP 07 166444 A (MURATA MACH LTD), 27. Juni 1995 (1995-06-27)

## Beschreibung

Die Erfindung betrifft eine Anordnung zum Steuern einer Rotations-Schaftkupplung für eine Schaftmaschine gemäss dem Oberbegriff des Anspruches 1 und eine Rotations-Schaftkupplung mit einer solchen Anordnung.

In der JP-8-296143 ist eine Anordnung zum Steuern einer Kupplungsvorrichtung beschrieben, die einen Träger, der innerhalb einer als Hohlwelle mit zwei in einer Radialebene angeordneten Löchern ausgebildeten Antriebswelle ortsfest angeordnet ist, zwei Schaltstössel, die in den Löchern angeordnet sind, zwei Steuerorgane, die im Träger bezüglich der Antriebswelle radial verschiebbar sind und ein Zweiweg - Ventil aufweist, um die Steuerorgane abwechselnd zu betätigen. Das Steuerorgan ist als einfach wirkender Arbeitszylinder mit einem unter Federwirkung stehenden Kolben ausgebildet.

Bei diesem Steuerorgan wird der Kolben nach erfolgter Ab- oder Umschaltung des Ventils mittels der Feder zurückgestellt und dabei der Arbeitszylinder gleichzeitig entlüftet. Bei den schnellen Schaltwechseln erweist sich dies als Nachteil.

Der Erfindung liegt die Aufgabe zugrunde eine Anordnung zum Steuern einer Kupplungsvorrichtung zu verbessern.

Die Aufgabe wird erfindungsgemäss durch die kennzeichnenden Merkmale des Anspruches 1 gelöst.

Der mit der Erfindung erreichbare Vorteil ist im Wesentlichen darin zu sehen, dass die Rückstellung des Kolbens formschlüssig innerhalb eines geringen Drehwinkels der Antriebswelle gewährleistet ist.

Eine Kupplungsvorrichtung mit einer Anordnung ist durch die Merkmale des Anspruches 7 gekennzeichnet.

Diese Kupplungsvorrichtung hat den Vorteil, dass durch die Anwendung von zwei Klinken und das gleichzeitige Einrasten derselben die Haltekraft gleichmässig auf die Klinken verteilt wird.

Nachfolgend wird die Erfindung anhand der beiliegenden Zeichnungen erläutert.

Es zeigen:
- Fig.1: eine Ausführung einer erfindungsgemässen Anordnung im Schnitt;
- Fig.2: eine andere Einzelheit der Anordnung im grösseren Massstab;
- Fig.3: eine Ausführung einer erfindungsgemässen Kupplungsvorrichtung für eine Rotations-Schaftmaschine mit einer Anordnung gemäss Fig.1 in der Freilaufstellung;
- Fig.4: eine räumliche Darstellung der Kupplungselemente gemäss Fig.3;
- Fig.5: einen Ausschnitt der Kupplungsvorrichtung mit aktiviertem Sperrhebel;
- Fig.6: einen Ausschnitt der Kupplungsvorrichtung mit deaktiviertem Sperrhebel;
- Fig.7: eine Ansicht der Kupplungsvorrichtung gemäss Fig.3 in der Antriebsstellung;
- Fig.8: eine zweite Ausführung einer erfindungsgemässen Kupplungsvorrichtung für eine Rotations-Schaftmaschine mit einer Anordnung gemäss Fig.1 und
- Fig.9: eine dritte Ausführung einer erfindungsgemässen Anordnung.

Bei Webmaschine werden zur Fachbildung Rotations-Schaftmaschinen angewendet, die für jeden Webschaft eine Kupplungsvorrichtung aufweisen. Die Kupplungsvorrichtungen sind nebeneinander auf einer Antriebswelle angeordnet und werden einzeln gesteuert, um den Webschaft gemäss vorgegebener Musterdaten zu betätigen. Die Kupplungsvorrichtung ist auf einer als Hohlwelle ausgebildete Antriebswelle angeordnet und enthält die hier in Rede stehende Anordnung, die im Wesentlichen innerhalb der Antriebswelle angeordnet ist.

Die Antriebswelle dreht intermitierend, d.h. nach einer Halbdrehungsphase von 180° folgt eine Stillstandsphase in der die Kupplungsvorrichtungen zum Ein- oder Auskuppeln angesteuert werden. Danach folgt die nächste Halbdrehungsphase von 180°, und sofort.

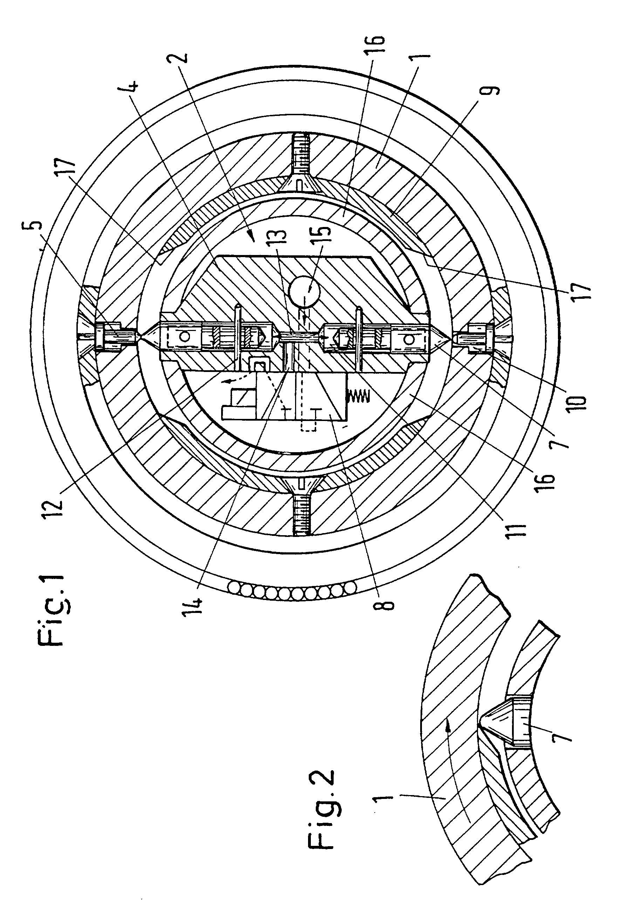

Die Fig.1 zeigt die Antriebswelle 1 in der Stillstandsphase mit der Anordnung. Die Anordnung umfasst einen länglichen Träger 4 und für jede nebeneinander angeordnete Kupplungsvorrichtung zwei Schaltstössel 5, zwei Steuerorgane 7, ein Magnetventil 8 und zwei Rückstellungselemente 9. Die Schaltstössel 5 sind in Löchern 10 verschiebbar angeordneten, welche in der Wand der Antriebswelle in einer Radialebene ausgebildet sind. Der Träger 4 hat zwei Bohrungen 11, die diametral gegenüberliegend ausgebildet sind und ist innerhalb der Antriebswelle so angeordnet, dass die Bohrungen 11 auf die Löcher 10 in der Wand der Antriebswelle während der Stillstandsphase ausgerichtet sind. Die Steuerorgane 7 sind in den Bohrungen 11 angeordnet und bilden mit diesen jeweils Arbeitszylinder, wobei ein Anschlag 12 vorgesehen ist, um den Hub des Steuerorgans 7 zu begrenzen. Das Magnetventil 8 ist am Träger 4 befestigt. Im Träger 4 sind ein Kanal 13, welcher die Arbeitszylinder miteinander verbindet, ein Anschlusskanal 14, welcher den Kanal 13 mit dem Magnetventil verbindet und ein Speisekanal 15 ausgebildet. Die Rückstellungselemente 9 sind als kreisbogenförmige Segmente mit Rampen 17 ausgebildet, die diametral gegenüberliegend an der Innenfläche der Antriebswelle 1 befestigt sind. Der Träger 4 ist an den Längsseiten mit Abdeckungen 16 versehen.

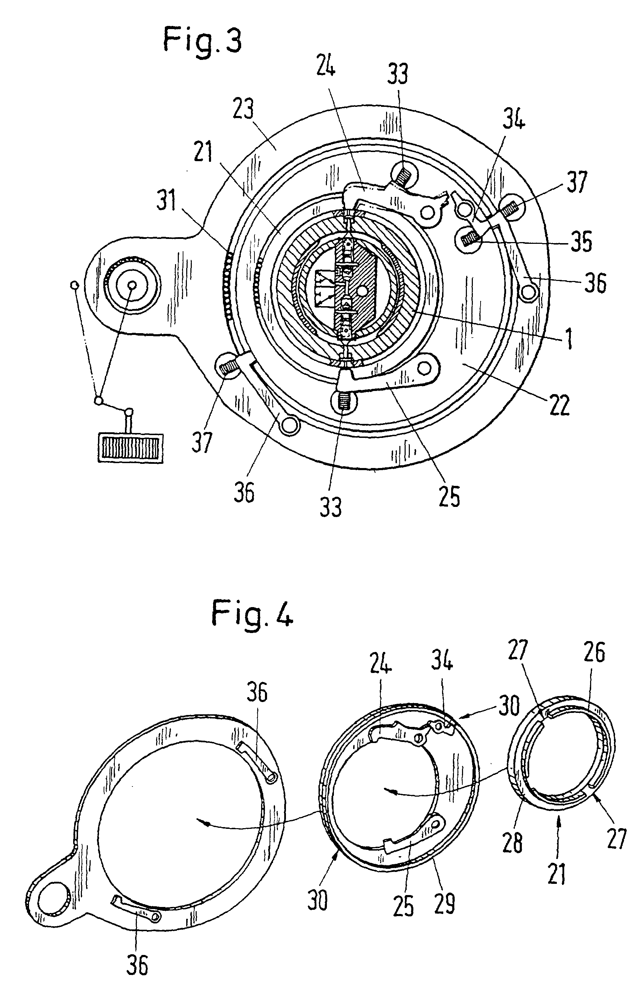

Die Fig.1 zeigt die Anordnung in der Stillstandsphase, in welcher das Magnetventil 8 durch einen Schaltbefehl geöffnet ist und die Arbeitszylinder mit Druckluft beaufschlagt sind, so dass die Steuerorgane aus dem Träger hervorstehen und die Schaltstössel 5, die in den Löchern 10 angeordnet, radial nach aussen gestossen sind. Der Schaltbefehl für die Magnetventile wird nur kurz über die Stillstandsphase hinaus aufrechterhalten. Wird dieser Schaltbefehl aufgehoben, so schliesst das Magnetventil 8 und der Arbeitszylinder wird über das Magnetventil 8 entlüftet. Durch die nach der Stillstandsphase beginnende Rotation der Antriebswelle werden die Steuerorgane mit den Rückstellungselementen 9 in Kontakt gebracht und durch die Rampe zurückgestellt (Fig.3). Hierdurch wird in vorteilhafter Weise die Entlüftung der Arbeitszylinder unterstützt.

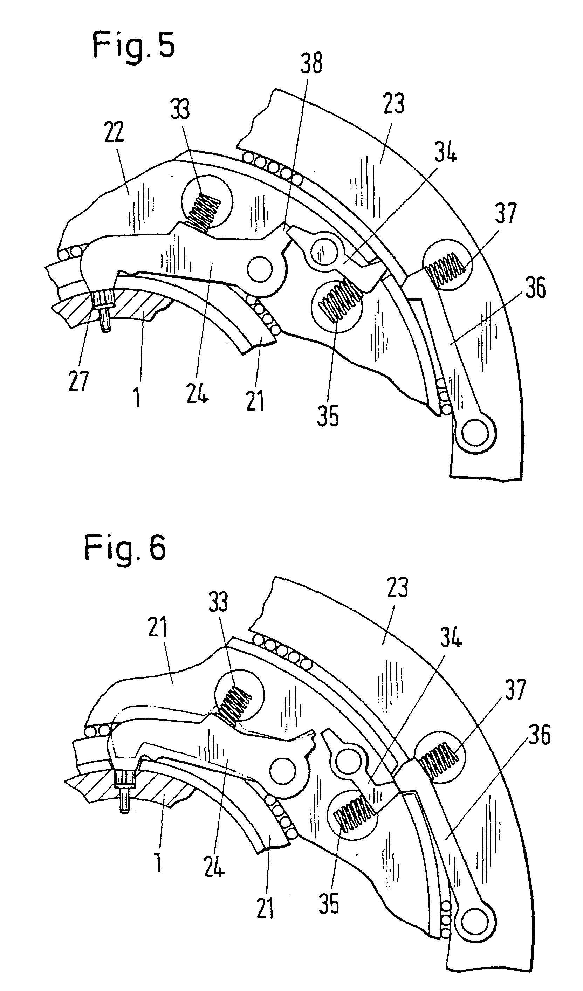

Es wird auf die Figuren 3 und 4 Bezug genommen. Die Kupplungsvorrichtung besteht aus einem Kupplungsring 21, einer Exzenterscheibe 22, einem Pleuel 23 und Kupplungselemente 24,25. Der Kupplungsring 21 besteht aus einem ersten Abschnitt 26 mit zwei diametral angeordneten Ausschnitten 27 und einem zweiten Abschnitt 28 (Fig.4). Der Kupplungsring ist auf der Antriebswelle 1 befestigt und so angeordnet, dass die Ausschnitte 27 des ersten Abschnittes 26 auf die in der Antriebswelle ausgebildeten Löchern 10 ausgerichtet sind. Die Exzenterscheibe 22 ist am Umfang des zweiten Abschnittes 28 des Kupplungsringes 21 mittels Kugeln 31 drehbar gelagert (Fig.3). Die Exzenterscheibe 22 weist am Umfang einen Ansatz 29 auf, der axial gerichtet und mit zwei Ausschnitten 30 versehen ist (Fig.5). Der Pleuel 23 ist am Umfang der Exzenterscheibe 22 mittels Kugeln 32 gelagert. Die Kupplungselemente umfassen eine Klinke 24 und eine Hilfsklinke 25, die schwenkbar auf der gleichen Seite der Exzenterscheibe spiegelbildlich angeordnet sind. Die Klinke 24 und die Hilfsklinke 25 sind jeweils durch eine Feder 33 gegen den ersten Abschnitt 26 des Kupplungsringes 21 vorgespannt und mit den Ausschnitten 27 in und ausser Eingriff bringbar. Wie die Fig.5 zeigt ist an der Exzenterscheibe 22 ein Sperrhebel 34 schwenkbar angeordnet, der durch die Feder 35 gegen das Kupplungselement 24 mit Verlängerung 38, drückt und dadurch das Kupplungselement formschlüssig so sperrt, dass es nicht aus dem Ausschnitt 27 während der Halbdrehungsphase der Antriebswelle 1 herausschwenken kann. In der Stillstandsphase der Antriebswelle sind die auf dem Pleuel 23 schwenkbar angeordneten Hebel 36 mittels Feder 37 unter Vorspannung in die Ausnahme 30 der Exzenterscheibe gedrückt, wodurch der Sperrhebel 34 aus dem Kontaktbereich der Verlängerung 38 geschwenkt ist und dadurch das Kupplungselement 24 vom Schaltstössel 5 angesteuert werden kann (Fig.6).

Nachfolgend wird die Funktion der Kupplungsvorrichtung beschrieben. Die Fig.3 zeigt die Kupplungsvorrichtung in der Stillstandsphase der Antriebswelle, in welcher aufgrund eines Steuerbefehls die Steuerorgane 7 mittels Druckluft radial nach aussen verschoben und die Schaltstössel 5 in den Ausschnitten 27 angeordnet sind. Die Hebel 36 sind aufgrund der Kraft der Feder 37 in die Ausschnitte 30 in der Exzenterscheibe 22 eingerastet. Dadurch werden einerseits der Pleuel 23 und die Exzenterscheibe 22 miteinander in Eingriff und andererseits der Sperrhebel 34 und das Kupplungselement 24 ausser Eingriff gebracht. In dieser Stellung werden die Kupplungselemente 24,25 mit der Kraft der Feder 33 gegen die Schaltstössel 5 gedrückt, die ein Einrasten der Kupplungselemente in die Ausschnitte 27 im Kupplungsring 21 verhindern, so dass die Antriebswelle 1 frei dreht und die Kupplungsvorrichtung in der Freilaufstellung steht. Die Fig.3 zeigt eine Position nach wenigen Winkelgraden der Drehung der Hohlwelle im Uhrzeigersinn.

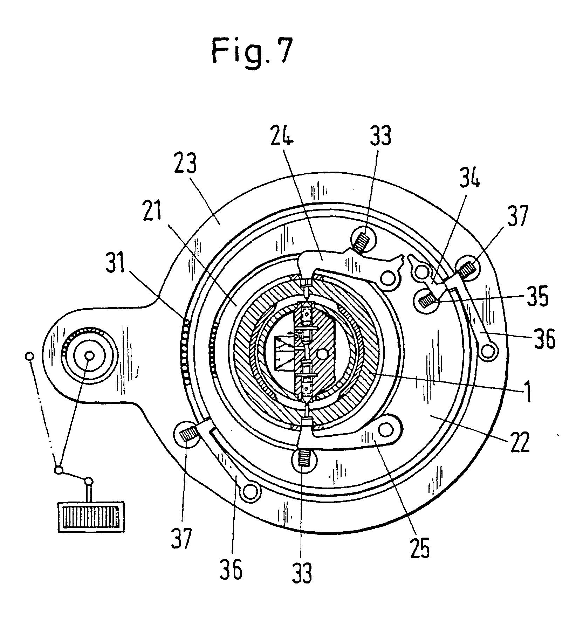

Die Fig.7 zeigt die Kupplungsvorrichtung in der Stillstandsphase der Antriebswelle, in welcher aufgrund des Fehlens eines Steuerbefehls die mittels der Rückstellungsorgane 9 radial nach innen verschobenen Steuerorgane 7 innerhalb des Trägers 4 und die Schaltstössel 5 in den Löchern 10 der Antriebswelle 1 angeordnet sind. In dieser Stellung werden die Kupplungselemente 24,25 mit der Kraft der Feder 33 in die Ausschnitte 27 im Kupplungsring 21 eingerastet. Bei der nach der Stillstandsphase beginnenden Halbdrehungsphase der Antriebswelle 1 werden die Hebel 36 aus den Ausschnitten 30 der Exzenterscheibe 22 ausgehoben. Der Sperrhebel 34 folgt dieser Bewegung und schwenkt in die Ausschnitte 30 ein und kommt in Eingriff mit der Verlängerung 38 des Kupplungselementes 24. Dadurch wird in vorteilhafter Weise die Verbindung zwischen der Antriebswelle 1 und der Exzenterscheibe 22 formschlüssig gesichert. Die Fig.5 zeigt eine Position nach wenigen Winkelgraden der Hohlwelle zusammen mit der Exzenterscheibe.

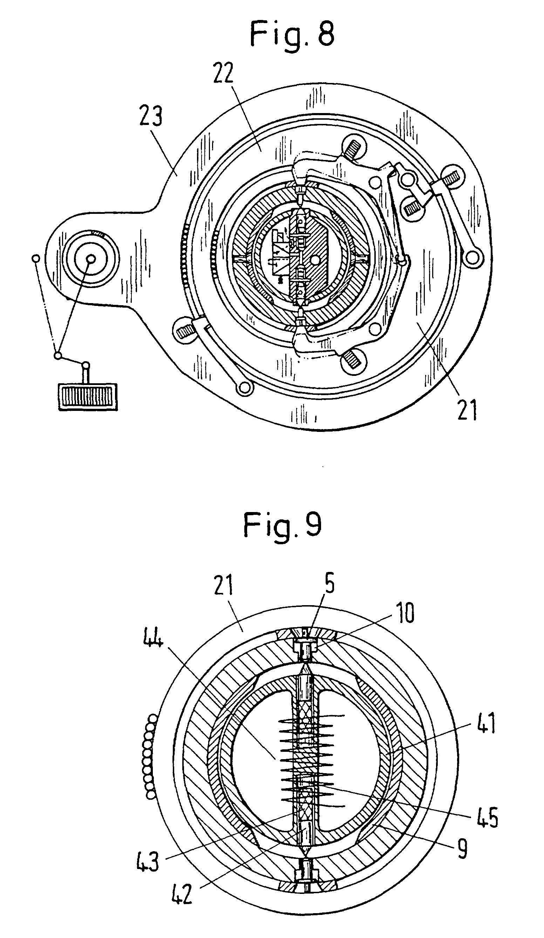

Die in Fig.8 gezeigte Ausführung unterscheidet sich von jener gemäss Fig.3 bzw. 5 lediglich durch die Ausbildung der Kupplungselemente, die in an sich bekannter Weise gekoppelt sind, wodurch sich eine optimale Synchronisation der Klinkenbewegungen erzielen lässt.

Die Fig.9 zeigt eine Ausführung mit einem Träger 41, mit zwei Steuerorganen 42, mit zwei Dauermagneten 43 und mit einer Wicklung 44. Der Träger 41 weist zwei Blindbohrungen 45 auf, die von aussen zugänglich sind. In jeder Blindbohrung 45 sind jeweils ein Steuerorgan 42 und ein Dauermagnet 43 angeordnet, die radial hin und her bewegbar sind. Hierzu sind die Dauermagneten so angeordnet, dass unterschiedliche Magnetpole einander gegenüberliegen, so dass die Steuerorgane 42 durch die Umkehr des Magnetflusses radial nach aussen bzw. nach innen bewegt werden.

Die Anordnung enthält einen Träger 4, der in einer als Hohlwelle mit in einer Radialebene angeordneten Löchern 10 ausgebildeten Antriebswelle 1 montiert ist, zwei Schaltstössel 5, die in den Löchern verschiebbar angeordnet sind, zwei Steuerorgane 7, die mit den Schaltstösseln in Wirkeingriff bringbar sind, Mittel 8 zur Betätigung der Steuerorgane und zwei Rückstellungselemente 9 für die Steuerorgane. Die Steuerorgane sind im Träger bezüglich der Antriebswelle radial in eine erste Stellung verschiebbar, um die Kupplungsvorrichtung in eine Antriebsstellung zu schalten und in eine zweite Stellung verschiebbar, um die Kupplungsvorrichtung in eine Freilaufstellung zu schalten Die Rückstellungsorgane 9 sind innerhalb der Antriebswelle 1 angeordnet, um die Steuerorgane 7 in die zweite Stellung zu verschieben.

Mit dieser Anordnung wird die Rückstellung der Steuerorgane gewährleistet.

Bei einer Kupplungsvorrichtung für eine Rotations-Schaftmaschine mit einer derartigen Vorrichtung sind zum Kuppeln der Antriebswelle mit der Exzenterscheibe zwei Mitnehmer vorgesehen, die gleichzeitig in und ausser Eingriff bringbar sind, um die auf die Mitnehmer einwirkende Haltekraft aufzuteilen.

## Patentansprüche

1. Anordnung zum Steuern einer Kupplungsvorrichtung für eine Rotations-Schaftmaschine, mit einem Träger (4), der in einer als Hohlwelle mit in einer Radialebene angeordneten Löchern (10) ausgebildeten Antriebswelle (1) ortsfest angeordnet ist, mit zwei Schaltstössel (5), mit zwei Steuerorgane (7), die mit den Schaltstösseln in Wirkeingriff bringbar und im Träger bezüglich der Antriebswelle radial in eine erste Stellung verschiebbar sind, um die Kupplungsvorrichtung in eine Antriebsstellung zu schalten und in eine zweite Stellung verschiebbar sind, um die Kupplungsvorrichtung in eine Freilaufstellung zu schalten und mit einem Mittel (8;43,44) zur Betätigung der Steuerorgane, **dadurch gekennzeichnet, dass** innerhalb der Antriebswelle (1) zwei Rückstellungsmittel (9), vorgesehen sind, um die Steuerorgane (7) formschlüssig in die zweite Stellung zu verschieben.

2. Anordnung nach Anspruch 1, **dadurch gekennzeichnet, dass** das Rückstellungsmittel (9) ein kreisbogenförmiger Abschnitt oder Segment ist, das an der Innenfläche der Antriebswelle (1) vorgesehen ist und dass jedes Rückstellungsmittel zwei Rampen (17) zum Betätigen der Steuerorgane aufweist.

3. Anordnung nach Anspruch 1 oder 2, **dadurch gekennzeichnet, dass** die Steuerorgane (7) gegenläufig verschiebbar im Träger (4) angeordnet sind.

4. Anordnung nach einem der Ansprüche 1 bis 3, **dadurch gekennzeichnet, dass** die Steuerorgane (7) als einfach wirkender Zylinder mit Kolben ausgebildet sind.

5. Anordnung nach einem der Ansprüche 1 bis 3, **dadurch gekennzeichnet, dass** das Mittel zum Betätigen des Steuerorgans ein Magnetventil (8) ist, welches dazu bestimmt ist, die Steuerorgane (7) gleichzeitig zu betätigen.

6. Anordnung nach einem der Ansprüche 1 bis 3, **dadurch gekennzeichnet, dass** das Mittel zum Betätigen der Steuerorgane (42) eine Wicklung (44) zur Erzeugung eines Magnetfeldes und zwei Dauermagnete (43) umfasst und dass die Steuerorgane und die Dauermagnete jeweils in einer Blindbohrung (45) so angeordnet sind, dass entgegengesetzte Magnetpole einander gegenüberliegen.

7. Kupplungsvorrichtung für eine Rotations-Schaftmaschine, mit einer Exzenterscheibe (22), die auf einer als Hohlwelle ausgebildeten Antriebswelle (1) mit in einer Radialebene liegenden Löchern (10) angeordnet ist, mit einem Pleuel (23), das am Umfang der Exzenterscheibe drehbar angeordnet ist, mit mindestens einen Mitnehmer (24), der an der Exzenterscheibe beweglich angeordnet ist, wobei jeder Schaltstössel (5) zwecks ein- bzw. ausrasten der Kupplungselemente (24,25) an diesen Mitnehmern anliegt und mit einer Anordnung nach einem der Ansprüche 1 bis 6, **dadurch gekennzeichnet, dass** ein Kupplungsring (21) mit zwei diametral gegenüberliegend ausgebildeten Ausschnitte (27) auf der Antriebswelle (1) so angeordnet ist, dass die Ausschnitte mit den Löchern (10) ausgerichtet sind und dass zwei Kupplungselemente (24,25) vorgesehen sind, die jeweils gleichzeitig in einen der Ausschnitte (27) ein- bzw. ausrastbar sind, um die Exzenterscheibe (22) mit der Antriebswelle (1) zu kuppeln bzw. entkuppeln.

8. Vorrichtung nach Anspruch 7, **dadurch gekennzeichnet, dass** die Kupplungselemente als Klinke (24) und Hilfsklinke (25) ausgebildet sind, die an der Exzenterscheibe (22) schwenkbar angeordnet sind und dass der Klinke und der Hilfsklinke (24;25) jeweils eine Feder (33) zugeordnet ist, um die Klinken gegen den Kupplungsring (21) vorzuspannen.

9. Vorrichtung nach Anspruch 7 oder 8, **gekennzeichnet durch** einen Sperrhebel (34), welcher der (24) zugeordnet und mit diesem in Eingriff bringbar ist, um eine Bewegung der Klinke (24) zu verhindern.

10. Vorrichtung nach einem der Ansprüche 7 bis 9, **dadurch gekennzeichnet, dass** zwei Hebel (36), die am Pleuel (2) schwenkbar angeordnet und mit der Exzenterscheibe (22) in Eingriff bringbar sind, um in der Freilaufstellung eine Drehung des Exzenterscheibe zu verhindern.

## Claims

1. Arrangement for the controlling of a coupling device for a rotary dobby having a carrier (4) which is arranged in a fixed location in a drive shaft (1) formed as a hollow shaft with apertures (10) arranged in a radial plane, having two shifting tappets (5) with two control members (7) which can be brought into working engagement with the shifting tappets and which are displaceable radially in the carrier with respect to the drive shaft into a first position in order to switch the coupling device into a drive position and are displaceable into a second position in order to switch the coupling device into a freewheel position and having means (8; 43, 44) for the actuation of the control members, **characterised in that** two resetting devices (9) are provided within the drive shaft (1) in order to displace the control members (7) in a form-fitted manner into the second position.

2. Arrangement in accordance with claim 1, **characterised in that** the resetting device (9) is a section or segment of circular arc shape which is provided at the inner surface of the drive shaft (1), and **in that** each resetting device has two ramps (17) for the actuation of the control members.

3. Arrangement in accordance with claim 1 or claim 2, **characterised in that** the control members (7) are arranged in the carrier (4) for displacement in opposite directions.

4. Arrangement in accordance with one of the claims 1 to 3, **characterised in that** the control members (7) are formed as single acting cylinders with pistons.

5. Arrangement in accordance with one of the claims 1 to 3, **characterised in that** the device for the actuation of the control member is a solenoid valve (8) which is intended to actuate the control members (7) simultaneously.

6. Arrangement in accordance with one of the claims 1 to 3, **characterised in that** the means for the actuation of the control members (42) includes a winding (44) for the generation of a magnetic field and two permanent magnets (43), and **in that** the control members and the permanent magnets are each so arranged in a blind bore (45) that opposite magnetic poles lie opposite to one another.

7. Coupling apparatus for a rotary dobby having an eccentric disc (22) which is arranged on a drive shaft (1) formed as a hollow shaft with apertures lying in a radial plane, having a connecting rod (23) which is rotatably arranged at the periphery of the eccentric disc, having at least one driver (24) which is movably arranged on the eccentric disc, with each switch thruster (5) contacting these drivers for the purpose of the engagement and disengagement of the coupling elements (24, 25) and having an arrangement in accordance with one of the claims 1 to 6, **characterised in that** a coupling ring (21) with two diametrically oppositely disposed cut-outs (27) is so arranged on the drive shaft (1) that the cut-outs are aligned with the apertures (10) and **in that** two coupling elements (24, 25) are provided which can each simultaneously engage into or disengage from one of the cut-outs (27) in order to couple or decouple the eccentric disc (22) with or from the drive shaft (1) respectively.

8. Apparatus in accordance with claim 7, **characterised in that** the coupling elements are formed as a pawl (24) and as an auxiliary pawl (25) which are pivotally arranged on the eccentric disc (22), and **in that** in each case a spring (33) is associated with the pawl and with the auxiliary pawl (24; 25) in order to bias the pawls towards the coupling ring (21.

9. Apparatus in accordance with claim 7 or claim 8, **characterised by** a blocking lever (34) which is associated with the pawl (24) and can be brought into engagement with it in order to prevent a movement of the pawl (24).

10. Apparatus in accordance with one of the claims 7 to 9, **characterised by** two levers (36) which are pivotally arranged on the connecting rod (2) and can be brought into engagement with the eccentric disc (22) in order to prevent a rotation of the eccentric disc in the freewheel position.

## Revendications

1. Agencement de commande d'un dispositif d'accouplement pour une ratière rotative, avec un support (4) qui est disposé fixément dans un arbre d'entraînement (1) réalisé comme arbre creux avec des trous (10) ménagés dans un plan radial, avec deux pilons de commande (5), avec deux organes de commande (7) qui peuvent être amenés avec les pilons de commande en prise active et qui sont déplaçables dans le support relativement à l'arbre d'entraînement radialement dans une première position pour commuter le dispositif d'accouplement en une position d'entraînement et qui sont déplaçables dans une deuxième position pour commuter le dispositif d'accouplement en une position de course libre et avec un moyen (8 ; 43, 44) pour l'actionnement des organes de commande, **caractérisé en ce qu'**à l'intérieur de l'arbre d'entraînement (1) deux moyens de rappel (9) sont prévus pour pousser les organes de commande (7) par concordance des formes dans la deuxième position.

2. Agencement selon la revendication 1, **caractérisé en ce que** le moyen de rappel (9) est un tronçon ou segment en forme d'arc de cercle qui est prévu à la face intérieure de l'arbre d'entraînement (1) et **en ce que** chaque moyen de rappel présente deux rampes (17) pour l'actionnement des organes de commande.

3. Agencement selon la revendication 1 ou 2, **caractérisé en ce que** les organes de commande (7) sont disposés d'une manière déplaçable en sens opposé dans le support (4).

4. Agencement selon l'une des revendications 1 à 3, **caractérisé en ce que** les organes de commande (7) sont réalisés sous forme de cylindre à effet simple avec des pistons.

5. Agencement selon l'une des revendications 1 à 3, **caractérisé en ce que** le moyen pour l'actionnement de l'organe de commande est une vanne magnétique (8) qui est destinée à actionner les organes de commande (7) en même temps.

6. Agencement selon l'une des revendications 1 à 3, **caractérisé en ce que** le moyen pour l'actionnement des organes de commande (42) comprend un enroulement (44) pour la production d'un champ magnétique et deux aimants permanents (43), et **en ce que** les organes de commande et les aimants permanents sont disposés chacun dans un perçage borgne (45) de façon que des pôles magnétiques opposés soient en regard.

7. Dispositif d'accouplement pour une ratière rotative, avec un disque d'excentrique (22) qui est disposé sur un arbre d'entraînement (1) réalisé comme arbre creux avec des trous (10) se situant dans un plan radial, avec une bielle (23) qui est disposée d'une manière tournante au pourtour du disque d'excentrique, avec au moins un entraîneur (24) qui est disposé d'une manière mobile au disque d'excentrique, où chaque pilon de commande (5), en vue de l'enclenchement respectivement de la sortie de prise des éléments d'accouplement (24, 25) s'applique à ces entraîneurs et avec un agencement selon l'une des revendications 1 à 6, **caractérisé en ce qu'**une bague d'accouplement (21) avec deux découpures (27) diamétralement opposées est disposée sur l'arbre d'entraînement (1) de façon que les découpures soient alignées avec les trous (10), et **en ce que** deux éléments d'accouplement (24, 25) sont prévus qui peuvent chacun s'enclencher dans respectivement sortir de prise simultanément avec l'une des découpures (27) pour accoupler respectivement désaccoupler le disque d'excentrique (22) avec l'arbre d'entraînement (1).

8. Dispositif selon la revendication 7, **caractérisé en ce que** les éléments d'accouplement sont réalisés sous forme de cliquet (24) et de cliquet auxiliaire (25) qui sont disposés d'une manière pivotante au disque d'excentrique (22), et **en ce qu'**il est associé au cliquet et au cliquet auxiliaire (24 ; 25) respectivement un ressort (33) pour précontraindre les cliquets contre la bague d'accouplement (21).

9. Dispositif selon la revendication 7 ou 8, **caractérisé par** un levier de blocage (34) qui est associé au cliquet (24) et qui peut être mis en prise avec celui-ci pour empêcher un mouvement du cliquet (24).

10. Dispositif selon l'une des revendications 7 à 9, **caractérisé en ce que** deux leviers (36) sont disposés d'une manière pivotante à la bielle (2) et peuvent être mis en prise avec le disque d'excentrique (22) pour empêcher en position de course libre une rotation du disque d'excentrique.
